# EUROPÄISCHE PATENTANMELDUNG

(11) **EP 0 584 383 A1**
(43) Veröffentlichungstag der Anmeldung: **02.03.1994**
(21) Anmeldenummer: 92114342.6
(22) Anmeldetag: 21.08.1992
(51) Int. Cl.: F16C 23/04

(54) **Selbstausrichtende Wellenlagerung**

(71) Anmelder: SIEMENS AKTIENGESELLSCHAFT, D-80333 München (DE)
(72) Erfinder: Fiedler, Rudolf, Dipl.-Ing., W-6990 Bad Mergentheim (DE)

(57) **Zusammenfassung**

Um eine senkrecht zur Welle (Schneckenwelle 11) mit einer Kalotte (6) beschickte Kalottenaufnahme (3) mit einer Befestigungsbrille (4;5) verschließen zu können, ist die Befestigungsbrille mit ihrem Außenrand (41;51) klemmfrei zur umgebenden Kalottenaufnahme (3) mittels radial vorstehender Befestigungslappen (42-45;52-55) in randseitig offene Aufnahmetaschen (31-35) der Kalottenaufnahme (3) eingelegt und verstemmt.

## Beschreibung

Die Erfindung bezieht sich auf eine selbstausrichtende Wellenlagerung gemäß Anspruch 1.

Durch die DE-A1-38 34 691 ist eine selbstausrichtende Wellenlagerung mit einer in einer bohrungsartigen Ausnehmung in einem gestellfesten Gehäuse angeordneten Lagerkalotte bekannt, die in einer am Grund der Ausnehmung ausgebildeten Lagerpfanne des Gehäuses liegt und durch eine Klemmbrille in die Lagerpfanne gedrückt wird; die Klemmbrille weist einen tellerförmigen Grundkörper auf, dessen Durchmesser größer ist als der Durchmesser der Ausnehmung. An ihrer der Lagerkalotte zugewandten Tellerinnenseite sind als Federmittel mehrere, sich zumindest annähernd in entgegengesetzten Richtungen erstreckende abgespreizte Federzungen vorgesehen, deren radial außen liegende freie Enden unter Vorspannung an der Lagerkalotte anliegen, wenn die Klemmbrille in ihrer Betriebsendlage durch Verkrallen in der Ausnehmung endgültig fixiert ist.

Eine demgegenüber unter Berücksichtigung der konstruktiven Gegebenheiten die geforderte verstellmöglichkeit der Kalotte besser gewährleistende und auch über lange Betriebsstandzeiten und rauhen Betriebseinsatz beibehaltende Sicherung der Kalotte in ihrer Kalottenaufnahme kann erfindungsgemäß durch eine selbstausrichtende Wellenlagerung gemäß Anspruch 1 erreicht werden; vorteilhafte Ausgestaltungen der Erfindung sind jeweils Gegenstand der Unteransprüche.

Durch die klemmfreie Halterung zwischen dem Außenrand der Befestigungsbrille und dem Innenumfang der Kalottenaufnahme kann sich die Befestigungsbrille bei der Montage relativ zur zu sichernden Kalotte selbstzentrieren und somit eine ungleichmäßige Belastung der Federzungen bzw. eine Verformung der Kalotte mit Sicherheit verhindert werden; durch den Verzicht auf eine allein kraftschlüssige Klemmhalterung der Befestigungsbrille in der Kalottenaufnahme werden Veränderungen der geometrischen Verhältnisse der Lageraufnahme, die entweder zu einem unerwünscht hohen Verstellmoment der Kalotte oder einer Lockerung der Kalottenhalterung während des Betriebes führen können vermieden.

Durch die Aufnahme der radial abstehenden Befestigungslappen in korrespondierende randseitig offene Aufnahmetaschen der Kalottenaufnahme ist einerseits bei der Montage eine sichere vorfixierte tangentiale Ausrichtung der Federzungen der Befestigungsbrille zu den Kugelflächen der Kalotte gewährleistet und durch die Anlagetiefe der Aufnahmetaschen gewährleistet, daß die Kalotte in ihrer Betriebsendlage nicht mit undefiniert zu hohem oder zu niedrigem Andruck an den balligen Kugelsegmenten der Befestigungsbrille anliegt. Die endgültige Fixierung der Befestigungsbrille über ihre Befestigungslappen in Befestigungstaschen erfolgt in fertigungstechnisch besonders einfacher Weise durch Verstemmen der oberhalb der Befestigungsbrille liegenden Randteile der Kalottenaufnahme und somit in einer Wirkungsrichtung und an einer Wirkungsstelle, die nicht zu einer Deformation der Kalottenaufnahme mit dadurch bedingtem unerwünschten Einfluß auf das Verstellmoment der Kalotte führen kann.

Der derart sich bei der Montage selbstzentrierend zu den Kugelsegmenten der Kalotte einstellenden und ohne unerwünschte Einflüsse auf das Verstellmoment sicher fixierbaren Befestigungsbrille kann in vorteilhafter Weise dadurch gleichzeitig eine weiche Federkennlinie gegeben werden, daß vom Außenrand der Befestigungsbrille ausgehende, mit ihren radial innen liegenden freien Enden an den Kugelsegmenten der Kalotte anliegende Federzungen vorgesehen sind, wobei in fertigungstechnisch einfacher Weise die freien Enden der Federzunge durch eine freigestanzte Mittelaussparung sowie davon ausgehende radiale Aussparungen gebildet sind.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: die axiale Draufsicht auf einen Getriebemotor mit teilweise geschnittenem Getriebegehäuse und in eine Kalottenaufnahme von oben eingelegter Kalotte ohne Befestigungsbrille;
- FIG 2: in einem vergrößerten Ausschnitt aus FIG 1 die mit einer ersten erfindungsgemäßen Befestigungsbrille in der Kalottenaufnahme gesicherte Kalotte;
- FIG 3: in einem vergrößerten Ausschnitt aus FIG 1 die mit einer zweiten erfindungsgemäßen Befestigungsbrille in der Kalottenaufnahme gesicherte Kalotte;
- FIG 4: die Ausführung gemäß FIG 3 im Schnittbild gemäß Schnittverlauf IV-IV

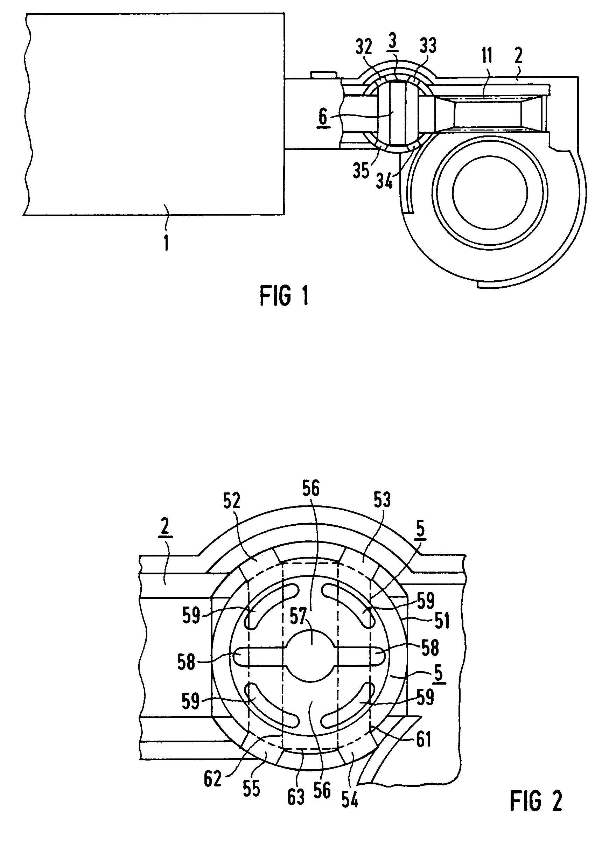

FIG 1 zeigt in axialer Längsansicht einen Getriebemotor mit einem nur schematisch angedeuteten Motorgehäuse 1 eines Elektromotors, dessen verlängerte Rotorwelle als Schnekkenwelle 11 in ein an das Motorgehäuse 1 angeflanschtes Getriebegehäuse 2 ragt. Die Schneckenwelle 11 ist in einer selbstausrichtenden Wellenlagerung mit einer Kalotte 6 gelagert, die in eine von der Oberseite gemäß FIG 1 beschickbare, senkrecht zur Achse der Schneckenwelle 11 geöffnete Kalottenaufnahme 3 mit einer Kalotte 6 montierbar und gemäß FIG 2 bis 4 durch eine Befestigungsbrille 4 bzw. 5 sicherbar ist. An der Unterseite der Kalottenaufnahme 3 wird die Kalotte 6 in hier nicht näher dargestellter, jedoch durch die DE-A1-38 34 691 bekannter Weise in einer eingeformten Lagerpfanne des Getriebegehäuses 2 aufgenommen.

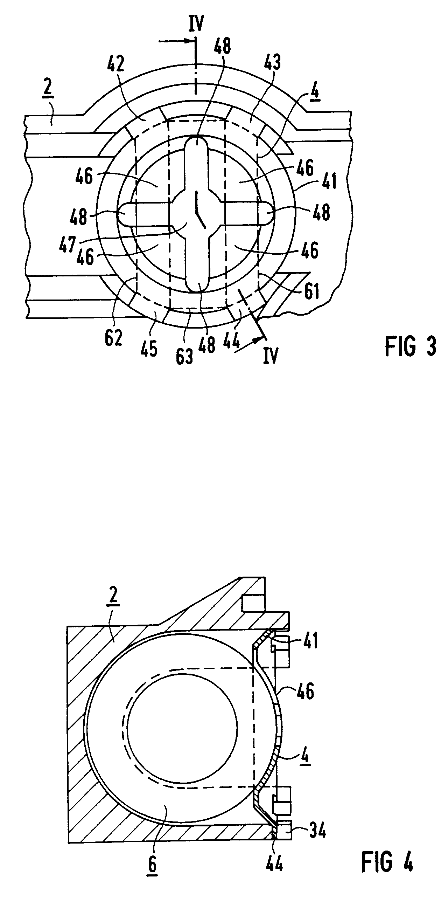

Die zur Sicherung der Kalotte 6 von der oberen offenen Seite gemäß FIG 1 an der Kalottenaufnahme 3 fixierbare Befestigungsbrille 4 entsprechend FIG 3 bzw. Befestigungsbrille 5 gemäß FIG 2 weist einen derartigen Außendurchmesser relativ zum Innendurchmesser der umgebenden Kalottenaufnahme 3 auf, daß die Befestigungsbrille 4 bzw.5 klemmfrei in die Kalottenaufnahme 6 senkrecht zur Schneckenwelle 11 einfuhrbar ist und sich dabei selbstzentrierend an die Kugelsegmente 61 bzw.62 beidseitig der zylindrischen Mantelfläche 63 der Kalotte 6 federnd anlegen kann.

Als federnde Anlage mit einer vorteilhaft weichen Federkennlinie sind für die Befestigungsbrille 4 gemäß FIG 3,4 bzw. für die Befestigungsbrille 5 gemäß FIG 2, Federlappen 46 bzw.56 vorgesehen, die ausgehend von dem Außenrand 41 bzw.51 der Befestigungsbrille 4 bzw.5 mit radial inneren freien Enden leicht nach außen gewölbt gegen die Kugelsegmente 61,62 der Kalotte 6 federnd zur Anlage kommen; dazu sind sowohl für die Befestigungsbrille 4 gemäß FIG 3 als auch für die Befestigungsbrille 5 gemäß FIG 2 freigestanzte, im wesentlichen kreisförmige Mittelaussparungen 47 bzw.57 sowie davon ausgehende radiale Aussparungen 48 bzw. 58 vorgesehen.

Während für ein erstes Ausführungsbeispiel gemäß FIG 3 vier Federlappen 46 mit je zwei radialen Aussparungen parallel zur Achse der zylindrischen Mantelfläche 63 der Kalotte 6 und je zwei radiale Aussparungen senkrecht zur Achse der zylindrischen Mantelfläche 63 der Kalotte 6 vorgesehen sind, ist die Befestigungsbrille 5 gemäß FIG 2 durch je eine radiale Aussparung senkrecht zur Achse der zylindrischen Mantelfläche 63 der Kalotte 6 und durch je zwei oberhalb bzw. unterhalb davon liegende tangentiale Aussparungen 59 in Nähe des Außenrandes 32 der Kalottenaufnahme 3 gekennzeichnet.

Zur Fixierung der Befestigungsbrille 4 bzw.5 an der Kalottenaufnahme 3 weist jede Befestigungsbrille radial vorstehende Befestigungslappen 42-45 bzw.52-55 auf, die in Beschickungsrichtung der Kalotteaufnahme 3 in korrespondierende randseitig offene Aufnahmetaschen 32 bis 35 der Kalottenaufnahme 3 axial so tief einlegbar sind, daß die Federzungen 46 bzw.56 mit definierter Vorspannung auf den Kugelsegmenten 61 bzw.62 der Kalotte 6 aufliegen, jedoch nicht zu einer Verformung der Kalotte 6 bzw. der Kalottenaufnahme 3 führen.

Die Fixierung der Befestigungsbrille 4 bzw.5 in ihrer Betriebsendlage erfolgt formschlüssig vorzugsweise durch Verstemmen des am Getriebegehäuse 2 im Bereich der Kalottenaufnahme 3 über die Auflagefläche der Befestigungslappen 42-45 bzw. 52-55 überstehenden Randes. Zweckmäßigerweise sind die Befestigungslappen 42-45 bzw.52-55 bzw. je eine zugehörige Aufnahmetasche 32-35 im Bereich der gegenüberliegenden Seiten der Kugelsegmente 61 bzw.62 der Kalotte 6 an den Außenrand ihrer Befestigungsbrillen 4 bzw.5 angeformt.

## Patentansprüche

1. Selbstausrichtende Wellenlagerung mit einer senkrecht zur Achse der zu lagernden Welle (Scneckenwelle 11) mit einer Kalotte (6) beschickbaren, durch eine Befestigungsbrille (4;5) verschließbare Kalottenaufnahme (3), wobei die Befestigungsbrille (4;5) mit ihrem Außenrand (41;51) klemmfrei zur umgebenden Kalottenaufnahme (3) mittels radial vorstehender Befestigungslappen (42-45;52-55) relativ zur Kalottenaufnahme (3) lagefixiert gehalten ist.

2. Selbstausrichtende Wellenlagerung nach Anspruch 1, wobei die Befestigungslappen (42-45;51-55) zumindest tangential formschlüssig in korrespondierende randseitig offene Aufnahmetaschen (31-35) der Kalottenaufnahme axial eingelegt und fixiert sind.

3. Selbsausrichtende Wellenlagerung nach Anspruch 2, wobei die Befestigungslappen (42-45;52-55) durch die Anlagetiefe der Aufnahmetaschen (32-35) axial gegen die Kalotte (6) lagefixiert sind.

4. Selbsausrichtende Wellenlagerung nach Anspruch 2 oder 3, wobei die Befestigungslappen (42-45;52-55), vorzugsweise selbstsperrend in den Aufnahmetaschen (32-35) vorfixiert gehalten, in ihrer Betriebsendlage durch Verstemmen endgültig fixiert sind.

5. Selbsausrichtende Wellenlagerung nach einem der Ansprüche 1-4, wobei Befestigungsbrillen (4;5) mit ausgehend von ihrem Außenrand (41;51) mit ihren radial innen liegenden freien Enden gegen die Kugelsegmente (61;62) der Kalotte (6) andrückende Federzungen (46;56) vorgesehen sind.

6. Selbstausrichtende Wellenlagerung nach Anspruch 5, wobei die freien Enden der Federzungen (46;56) durch eine freigestanzte Mittelaussparung (47;57) sowie davon ausgehende radiale Aussparungen (48;58) gebildet sind.

7. Selbstausrichtende Wellenlagerung nach Anspruch 6, wobei vier Federzungen (46) mit je zwei radialen Aussparungen (48) parallel zur Achse der zylindrischen Mantelfläche (63) und je zwei radialen Aussparungen (48) senkrecht zur Achse der zylindrischen Mantelfläche (63) der Kalotte (6) vorgesehen sind. (FIG 2)

8. Selbstausrichtende Wellenlagerung nach Anspruch 6, wobei je Federzunge (56) im Bereich der Kugelsegmente (61,62) der Kalotte (6) tangentiale Aussparungen (59) in Nähe des Außenrandes (31) der Kalottenaufnahme (3) vorgesehen sind.(FIG 2)

9. Selbstausrichtende Wellenlagerung nach Anspruch 8, wobei zwei Federzungen (56) mit je einer radialen Aussparung (58) senkrecht zur Achse der zylindrischen Mantelfläche (63) der Kalotte (6) vorgesehen ist. (FIG 2)

10. Selbstausrichtende Wellenlagerung nach einem der Ansprüche 1-9, wobei je ein Befestigungslappen (42-45;52-55) bzw. je eine Aufnahmetasche (32-35) im Bereich der Kugelsegmente (61;62) der Kalotte (6) vorgesehen sind.
